(19) Europäisches Patentamt
European Patent Office
Office européen des brevets

(11) **EP 1 575 699 B1**

(12) **EUROPEAN PATENT SPECIFICATION**

(45) Date of publication and mention
of the grant of the patent:
**01.02.2012 Bulletin 2012/05**

(21) Application number: **03780093.5**

(22) Date of filing: **01.12.2003**

(51) Int Cl.:
***B01J 8/18*** (2006.01)

(86) International application number:
**PCT/EP2003/013502**

(87) International publication number:
**WO 2004/056464 (08.07.2004 Gazette 2004/28)**

(54) **METHOD AND APPARATUS FOR HEAT TREATMENT IN A FLUIDISED BED**

VERFAHREN UND VORRICHTUNG FÜR EINE THERMISCHE BEHANDLUNG IN EINEM WIRBELBETT

PROCEDES ET APPAREIL POUR UN TRAITEMENT THERMIQUE DANS UN LIT FLUIDISE

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **23.12.2002 DE 10260736**

(43) Date of publication of application:
**21.09.2005 Bulletin 2005/38**

(73) Proprietor: **Outotec Oyj**
**02200 Espoo (FI)**

(72) Inventors:
• **ANASTASIJEVIC, Nikola**
**63674 Altenstadt (DE)**
• **HIRSCH, Martin**
**61381 Friedrichsdorf (DE)**

(74) Representative: **KEIL & SCHAAFHAUSEN**
**Patentanwälte**
**Cronstettenstraße 66**
**60322 Frankfurt am Main (DE)**

(56) References cited:
**EP-A- 0 630 683      DE-A- 2 710 978**
**US-A- 4 817 563**

## Description

The present invention relates to a method for the heat treatment of fine-grained solids, in particular for the thermal decomposition of salts, in which the solids are heated to a temperature of 200 to 1400°C in a fluidized-bed reactor, and to a corresponding plant.

Such methods and plants are known for instance from DE 27 10 978 A1 for the thermal decomposition of salts which chiefly contain iron sulfate to obtain iron oxide and sulfur dioxide in a circulating fluidized bed of a reactor. At the bottom of the reactor, primary air is supplied for fluidizing the solids, whereas secondary air is additionally introduced into the upper portion of the reactor. Between the primary air and secondary air feed conduits fuel is introduced into the reactor. Preferably, there should always first be effected an incomplete combustion of the fuel to produce a reducing atmosphere in the reactor, whereby the decomposition of salts is improved. In a second step, the supply of secondary air provides for a complete combustion of the fuel. For fluidizing the solids, a large amount of primary air is, however, necessary, which leads to a further combustion of the fuel. A reduction of the amount of primary air, on the other hand, effects an only insufficient fluidization of the solids, which leads to a reduced heat transfer. Therefore, the amount of primary air can only be adjusted within narrow limits. In addition, the introduction of the secondary air must be designed rather complex to achieve a sufficient mixing of the secondary air with the fuel.

A similar method is known from DE 24 08 308 C2 for producing magnesium oxide and sulfur dioxide from magnesium sulfate. For this purpose, magnesium sulfate is thermally decomposed during the combustion of a fuel in a fluidized-bed furnace.

Moreover, for the thermal treatment of solids reactors are generally known, whose fluidized bed is formed either stationary or circulating. However, the utilization of energy achieved when using a stationary fluidized bed needs improvement. This is particularly due to the fact that the mass and heat transfer is rather moderate due to the comparatively low degree of fluidization. On the other hand, circulating fluidized beds have better mass and heat transfer conditions due to the higher degree of fluidization, but are restricted in terms of their solids retention time.

EP 0 630 683 A1 discloses a method and an apparatus for cooling hot gas in a reactor. The hot gas stream enters the reactor by an inlet tube and solid particles are conveyed from a fluidized bed surrounding the inlet tube through a riser into the upper section of the reactor, where they are separated and returned into the outer part of the fluidized bed. The cooled gas is discharged through outlets provided in the lid of the reactor.

## Description of the Invention

Therefore, it is the object of the present invention to improve the mass and heat transfer conditions and the decomposition of salts during the heat treatment of fine-grained solids.

In accordance with the invention, this object is solved by a method and a plant comprising the features of claims 1 and 12, respectively.

In the method of the invention, the advantages of a stationary fluidized bed, such as a sufficiently long solids retention time, and the advantages of a circulating fluidized bed, such as a good mass and heat transfer, can surprisingly be combined with each other during the heat treatment, in particular the thermal decomposition of salts, while the disadvantages of both systems are avoided. When passing through the upper region of the central tube, the first gas or gas mixture entrains solids from the annular stationary fluidized bed, which is referred to as annular fluidized bed, into the mixing chamber, so that due to the high slip velocities between the solids and the first gas an intensively mixed suspension is formed and an optimum mass and heat transfer between the two phases is achieved. By correspondingly adjusting the bed height in the annular fluidized bed as well as the gas velocities of the first gas or gas mixture and of the fluidizing gas, the solids loading of the suspension above the orifice region of the central tube can be varied within wide ranges, so that the pressure loss of the first gas between the orifice region of the central tube and the upper outlet of the mixing chamber can lie between 1 mbar and 100 mbar. In the case of a high solids loading of the suspension in the mixing chamber, a large part of the solids will separate out of the suspension and fall back into the annular fluidized bed. This recirculation is called internal solids recirculation, the stream of solids circulating in this internal circulation normally being significantly larger than the amount of solids supplied to the reactor from outside. The (smaller) amount of not precipitated solids is discharged from the mixing chamber together with the first gas or gas mixture. The retention time of the solids in the reactor can be varied within wide limits by the selection of height and cross-sectional area of the annular fluidized bed and be adapted to the desired heat treatment. Due to the high solids loading on the one hand and the good suspension of the solids in the gas stream on the other hand, excellent conditions for a good mass and heat transfer are obtained above the orifice region of the central tube. The amount of solids entrained from the reactor with the gas stream is separated from the gas stream and completely or at least partly recirculated to the reactor, with the recirculation expediently being fed into the stationary fluidized bed. The stream of solid matter thus recirculated to the annular fluidized bed normally lies in the same order of magnitude as the stream of solid matter supplied to the reactor from outside. Apart from the excellent utilization of energy, another advantage of the method in accordance with the invention consists in the possibility of quickly, easily and reliably adjusting the energy transfer of the method and the mass transfer to the requirements by changing the flow velocities of the first gas or gas mixture and of the fluidizing gas. Therefore, the amount of the fluidizing gas (primary gas) supplied can be dosed such that e.g. a reducing atmosphere is obtained in the annular fluidized bed, whereas an intensive heat transfer takes place in the mixing chamber.

To ensure a particularly effective heat transfer in the mixing chamber and a sufficient retention time in the reactor, the gas velocities of the first gas mixture and of the fluidizing gas are preferably adjusted for the fluidized bed such that the dimensionless Particle-Froude-Numbers ($Fr_P$) in the central tube are 1.15 to 20, in particular between about 7 and 8, in the annular fluidized bed 0.115 to 1.15, in particular between about 0.4 and 0.5, and/or in the mixing chamber 0.37 to 3.7, in particular between about 1.5 and 1.8. The Particle-Froude-Numbers are each defined by the following equation:

$$Fr_P = \frac{u}{\sqrt{\frac{(\rho_s - \rho_f)}{\rho_f} * d_p * g}}$$

with

u = effective velocity of the gas flow in m/s
$\rho_s$ = density of a solid particle in kg/m$^3$
$\rho_f$ = effective density of the fluidizing gas in kg/m$^3$
$d_p$ = mean diameter in m of the particles of the reactor inventory (or the particles formed) during operation of the reactor
g = gravitational constant in m/s$^2$.

When using this equation it should be considered that $d_p$ does not indicate the mean diameter ($d_{50}$) of the material used, but the mean diameter of the reactor inventory formed during the operation of the reactor, which can differ significantly from the mean diameter of the material used (primary particles). Even from very fine-grained material with a mean diameter of e.g. 3 to 10 $\mu$m, particles (secondary particles) with a mean diameter of 20 to 30 $\mu$m can for instance be formed during the heat treatment. On the other hand, some materials, e.g. ores, are decrepitated during the heat treatment.

In accordance with a development of the invention it is proposed to adjust the bed height of solids in the reactor such that the annular fluidized bed for instance at least partly extends beyond the upper orifice end of the central tube by a few centimeters, and thus solids are constantly introduced into the first gas or gas mixture and entrained by the gas stream to the mixing chamber located above the orifice region of the central tube. In this way, there is achieved a particularly high solids loading of the suspension above the orifice region of the central tube.

By means of the method in accordance with the invention, in particular sulfate-containing solids, such as iron sulfate or magnesium sulfate, can be exposed to an effective heat treatment, to obtain in particular oxides from the salts. The solids can be introduced into the reactor upon being preheated to e.g. about 350°C.

The generation of the amount of heat necessary for the operation of the reactor can be effected in any way known to the expert for this purpose, for instance also by internal combustion of fuel in the reactor. It turned out to be advantageous to operate the reactor at a pressure of 0.8 to 10 bar, and particularly preferably at atmospheric pressure. Via the central tube, hot gas, for instance air preheated to about 300 to 500°C, can be supplied to the reactor. Air preheated to 300 to 500°C can also be supplied to the reactor as fluidizing gas. Preferably, the fuel is only incompletely burnt in the annular fluidized bed under a reducing atmosphere and will only burn out completely in the mixing chamber.

Upstream of the reactor, one or more preheating stages can be provided, in which the solids are suspended, dried and/or preheated in a preheating stage prior to the heat treatment in the reactor, where at least part of the moisture content of the solids can be removed.

A utilization of the obtained reactor exhaust gas rich in sulfur dioxide can be achieved when a plant for producing sulfuric acid is provided downstream of the reactor.

A plant in accordance with the invention as indicated in claim 12 comprises a fluidized-bed reactor for the heat treatment of fine-grained solids, in particular salts, and has a gas supply system which is formed such that gas flowing through the gas supply system entrains solids from a stationary annular fluidized bed, which at least partly surrounds the gas supply system, into the mixing chamber. Preferably, this gas supply system extends into the mixing chamber. Upstream the reactor a preheating stage is provided for removing at least part of the moisture from the solids prior to entry into the reactor. It is, however, also possible to let the gas supply system end below the surface of the annular fluidized bed. The gas is then introduced into the annular fluidized bed e.g. via lateral apertures, entraining solids from the annular fluidized bed into the mixing chamber due to its flow velocity.

In accordance with the invention, the gas supply system preferably has a central tube extending upwards substantially vertically from the lower region of the reactor preferably into the mixing chamber, which central tube is surrounded by a chamber which at least partly extends around the central tube and in which the stationary annular fluidized bed is formed. The central tube can constitute a nozzle at its outlet opening and/or have one or more apertures distributed around its shell surface, so that during the operation of the reactor solids constantly get into the central tube through the apertures and are entrained by the first gas or gas mixture through the central tube into the mixing chamber. Of course, two or more central tubes with different or identical dimensions and shapes may also be provided in the reactor. Preferably, however, at least one of the central tubes is arranged approximately centrally with reference to the cross-sectional area of the reactor.

In accordance with the invention, a separator, in particular a cyclone for separating solids is provided downstream of the reactor, the separator having a solids conduit leading to the annular fluidized bed of the reactor and/or to a downstream treatment stage. In accordance with the invention, the finished product can also directly be withdrawn from the reactor via a solids conduit leading out of the annular fluidized bed of the reactor.

To provide for a reliable fluidization of the solids and the formation of a stationary fluidized bed, a gas distributor is provided in the annular chamber of the reactor, which divides the chamber into an upper fluidized bed and a lower gas distributor chamber, the gas distributor chamber being connected with a supply conduit for fluidizing gas. Instead of the gas distributor chamber, there can also be provided a gas distributor composed of tubes and/or nozzles or a wind box.

For utilizing the exhaust gas obtained in the reactor, which has a content of sulfur dioxide, a plant for producing sulfuric acid is provided downstream of the reactor in accordance with one embodiment of the invention.

In the annular fluidized bed and/or the mixing chamber of the reactor, means for deflecting the solid and/or fluid flows can be provided in accordance with the invention. It is for instance possible to position an annular weir, whose diameter lies between that of the central tube and that of the reactor wall, in the annular fluidized bed such that the upper edge of the weir protrudes beyond the solids level obtained during operation, whereas the lower edge of the weir is arranged at a distance from the gas distributor or the like. Thus, solids separated out of the mixing chamber in the vicinity of the reactor wall must first pass by the weir at the lower edge thereof, before they can be entrained by the gas flow of the central tube back into the mixing chamber. In this way, an exchange of solids is enforced in the annular fluidized bed, so that a more uniform retention time of the solids in the annular fluidized bed is obtained.

Developments, advantages and possible applications of the invention can also be taken from the following description of an embodiment and the drawing. All features described and/or illustrated form the subject-matter of the invention per se or in any combination, independent of their inclusion in the claims or their back-reference.

## Brief Description of the Drawings

The only Figure shows a process diagram of a method and a plant in accordance with an embodiment of the present invention.

## Detailed Description of the Preferred Embodiments

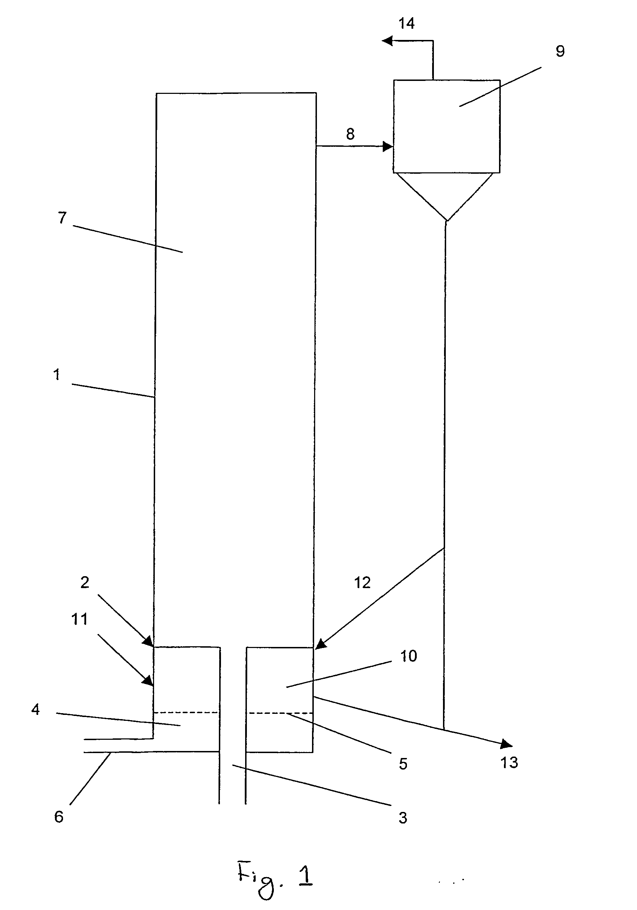

In the method shown in Fig. 1, which is in particular suited for the heat treatment of sulfate-containing salts or similar solids, a solid is charged into a reactor 1 via a supply conduit 2. The for instance cylindrical reactor 1 has a central tube 3 arranged approximately coaxially with its longitudinal axis, which central tube extends upwards from the bottom of the reactor 1 substantially vertically.

In the vicinity of the bottom of the reactor 1, an annular gas distributor chamber 4 is provided, which is terminated at the top by a gas distributor 5 having through openings. A supply conduit 6 opens into the gas distributor chamber 4.

In the vertically upper region of the reactor 1, which forms a mixing chamber 7, a discharge conduit 8 is disposed, which opens into a separator 9 constituting a cyclone.

When solids are now introduced into the reactor 1 via the supply conduit 2, a layer annularly surrounding the central tube 3 is formed on the gas distributor 5, which layer is referred to as annular fluidized bed 10. Fluidizing gas introduced into the gas distributor chamber 4 through the supply conduit 6 flows through the gas distributor 5 and fluidizes the annular fluidized bed 10, so that a stationary fluidized bed is formed. The velocity of the gases supplied to the reactor 1 is adjusted such that the Particle-Froude-Number in the annular fluidized bed 10 is about 0.4 to 0.5.

Due to the supply of more solids into the annular fluidized bed 10, the solids level in the reactor 1 rises to such an extent that solids get into the orifice of the central tube 3. Through the central tube 3, heated air is at the same time introduced into the reactor 1. The velocity of the gas supplied to the reactor 1 preferably is adjusted such that the Particle-Froude-Number in the central tube 3 is about 7 to 8 and in the mixing chamber about 1.5 to 1.8. Due to these high gas velocities, the gas flowing through the central tube 3 entrains solids from the stationary annular fluidized bed 10 into the mixing chamber 7 when passing through the upper orifice region.

Since the level of the annular fluidized bed 10 is raised above the upper edge of the central tube 3, solids flow over this edge into the central tube 3, whereby an intensively mixed suspension is formed. The upper edge of the central tube 3 can be straight, wavy or have some other shape, e.g. be serrated. It can also have lateral inlet openings in the shell region. As a result of the reduction of the flow velocity due to the expansion of the gas jet upon leaving the central tube and/or by impingement on one of the reactor walls, the entrained solids quickly lose velocity and partly fall back into the annular fluidized bed 10. The amount of non-precipitated solids is discharged from the reactor 1 together with the gas stream via conduit 8. Between the reactor regions of the stationary annular fluidized bed 10 and the mixing chamber 7 a solids circulation is obtained, by means of which a good heat transfer is ensured. Before the further processing, the solids discharged via conduit 8 are separated from the gases or gas mixtures in the cyclone 9.

In the method shown in the Figure, fine-grained preheated salt with a grain size of less than 3 mm is for instance charged to the reactor 1 via a screw conveyor and fluidized by preheated air (primary air) in the annular fluidized bed 10. At the same time, e.g. gaseous fuel together with the primary air or solid or liquid fuel is introduced into the annular fluidized bed 10 via a separate supply conduit 11. In the annular fluidized bed, the fuel is burnt incompletely under reducing conditions. The amount of primary air supplied for fluidization can be varied within wide ranges, so that for instance a strongly reducing atmosphere is obtained in the annular fluidized bed 10, which promotes a decomposition of salts. A large part of the heat transfer takes place in the mixing chamber 7 and is therefore not much influenced by changing the supply of fluidizing gas into the annular fluidized bed 10. The reduction of the amount of primary air supplied in addition prevents an excessive cooling of the solids, so that the same remain warmer.

Through the central tube 3, preheated air (secondary air) is supplied to the reactor 1, so that an intensive mixing of the preburnt solids with the secondary air is made possible in the mixing chamber. Under these oxidizing conditions, a substantially complete burn-out of the fuel is achieved in the mixing chamber 7, with an intensive heat transfer taking place at the same time. Via the central tube 3, further fuel can be supplied, so that the input of energy into the reactor 1 can be controlled without changing the reducing conditions in the annular fluidized bed 10. Constructively, the introduction of secondary air through the central tube 3 is effected in a simple way, so that the manufacturing costs of the reactor 1 can be decreased.

The amount of solids which due to the high velocities of the gas flowing through the central tube 3 are entrained when passing therethrough and are discharged through conduit 8 into the cyclone 9, can either be dosed and recirculated to the annular fluidized bed 10 via conduit 12, so as to control the bed height of the solids in the reactor 1, or be supplied to an aftertreatment together with the stream of solids withdrawn from the annular fluidized bed 10 via conduit 13.

The exhaust gas of the cyclone 9 downstream of the reactor 1 can be supplied to a non-illustrated plant for producing sulfuric acid via conduit 14. In this way, the sulfur dioxide contained in the exhaust gas can be utilized.

By changing the supply of air through conduit 6 (primary air) and the amount of fuel in the annular fluidized bed 10, nitrates or chlorides can also specifically be decomposed under both reducing and oxidizing conditions, by supplying the fuel not to the annular fluidized bed 10, but first to the mixing chamber 7. A decomposition of other sulfates, such as magnesium sulfate, a waste product of fertilizer production, is also possible.

In the following, the invention will be explained with reference to two examples demonstrating the invention, but not restricting the same.

## Example 1 (Thermal decomposition of iron sulfate)

In a plant in accordance with the Figure, 240 kg/h preheated iron sulfate with a temperature of 350°C were introduced via conduit 2 into the annular fluidized bed in the reactor 1. At the same time, a mixture of 20 $Nm^3$/h preheated air with a temperature of 350°C and 17 kg/h fuel (40000 kJ/kg) was introduced into the gas distributor chamber 4 via conduit 6 and burnt in the annular fluidized bed 10 under a reducing atmosphere.

Via the central tube 3, another 180 $Nm^3$/h preheated air with a temperature of 350°C were introduced into the reactor 1, which mixed with the solids from the annular fluidized bed 10, the incompletely burnt fuel and the primary air. In the mixing chamber 7, the fuel then completely burnt out. There were obtained 310 $Nm^3$/h exhaust gas with a temperature of 950°C and a sulfur dioxide content of 9.5 %, which was discharged from the reactor 1 via conduit 8. In this way, 120 kg/h iron oxide could be withdrawn from the annular fluidized bed 10 via conduit 13.

## Example 2 (Thermal decomposition of magnesium sulfate)

Via conduit 2, 2.39 t/h preheated anhydrous magnesium sulfate with a temperature of 350°C were charged into the annular fluidized bed 10 of the reactor, where the solids were fluidized with 200 $Nm^3$/h preheated air with a temperature of 400°C via the gas distributor chamber 4. In addition, 450 kg/h fuel (40000 kJ/kg) were introduced into the reactor via the gas distributor chamber. The fuel was burnt incompletely in the annular fluidized bed 10 under a reducing atmosphere.

Via the central tube 3, 3800 $Nm^3$/h preheated air with a temperature of 400°C were at the same time supplied to the reactor 1, which air mixed with the solids from the annular fluidized bed 10, the incompletely burnt fuel and the primary air supplied via conduit 6. In the mixing chamber 7, the fuel then burnt out completely, so that there were obtained 4500 $Nm^3$/h exhaust gas with a temperature of 1130°C and a sulfur dioxide content of 10.5 %, which was discharged from the reactor 1 via conduit 8. At the same time, 1.07 t/h magnesium oxide could be withdrawn from the annular fluidized bed 10 via conduit 13.

## List of Reference Numerals

1    reactor

2    supply conduit

3    central tube

4    gas distributor chamber

5    gas distributor

6    supply conduit

7    mixing chamber

8    conduit

9    separator

10    annular fluidized bed

11    fuel supply

12    solids return conduit

13    solids conduit

14    exhaust gas conduit

**Claims**

1.  A method for the heat treatment of fine-grained solids, in particular for the thermal decomposition of salts, in which the solids are heated to a temperature of 200 to 1400°C in a fluidized bed reactor (1) , **characterized in that** a first gas or gas mixture is introduced from below through a preferably central gas supply tube (3) into a mixing chamber (7) of the reactor (1), the gas supply tube (3) being at least partly surrounded by a stationary annular fluidized bed (10) which is fluidized by supplying fluidizing gas, and that the gas velocities of the first gas or gas mixture and of the fluidizing gas for the annular fluidized bed (10) are adjusted such that the Particle-Froude-Numbers in the gas supply tube (3) are between 1 and 100, in the annular fluidized bed (10) between 0.02 and 2, and in the mixing chamber (7) between 0.3 and 30.

2.  The method as claimed in claim 1, **characterized in that** the Particle-Froude-Number in the gas supply tube (3) is between 1.15 and 20, in particular between about 7 and 8.

3.  The method as claimed in claim 1 or 2, **characterized in that** the Particle-Froude-Number in the annular fluidized bed (10) is between 0.115 and 1.15, in particular between about 0.4 and 0.5.

4.  The method as claimed in any of the preceding claims, **characterized in that** the Particle-Froude-Number in the mixing chamber (7) is between 0.37 and 3.7, in particular between about 1.5 and 1.8.

5.  The method as claimed in any of the preceding claims, **characterized in that** the bed height of solids in the reactor (1) is adjusted such that the annular fluidized bed (10) extends beyond the upper orifice end of the gas supply tube (3), and that solids are constantly introduced into the first gas or gas mixture and are entrained by the gas stream to the mixing chamber (7) located above the orifice region of the gas supply tube (3).

6.  The method as claimed in any of the preceding claims, **characterized in that** sulfate-containing solids such as iron sulfate or magnesium sulfate, preheated for instance to about 350°C, are supplied as starting material.

7.  The method as claimed in any of the preceding claims, **characterized in that** preheated air with a temperature of about 300 to 500°C is supplied to the reactor (1) via the gas supply tube (3).

8.  The method as claimed in any of the preceding claims, **characterized in that** preheated air with a temperature of about 300 to 500°C is supplied to the reactor (1) as fluidizing gas.

9.  The method as claimed in any of the preceding claims, **characterized in that** fuel is introduced into the annular fluidized bed (10) and/or the mixing chamber (7) of the reactor (1) and that the pressure in the reactor (1) is between 0.8 and 10 bar.

10.  The method as claimed in claim 9, **characterized in that** the fuel is burnt incompletely under a reducing atmosphere in the annular fluidized bed (10) and burns out completely in the mixing chamber (7).

11.  The method as claimed in any of the preceding claims, **characterized in that** the exhaust gas of the thermal treatment in the reactor (1) is supplied to a downstream plant for producing sulfuric acid.

12.  A plant for the heat treatment of fine-grained solids according to a method as claimed in any of claims 1 to 11, comprising a reactor (1) constituting a fluidized bed reactor for the heat treatment, **characterized in that** the reactor (1) has a gas supply system which is formed such that gas flowing through the gas supply system entrains solids from a stationary annular fluidized bed (10), which at least partly surrounds the gas supply system, into the mixing chamber (7), that upstream of the reactor a preheating stage is provided for removing at least part of the moisture content of the solids, that a separator (9) for separating solids is provided downstream of the reactor (1), and that the separator (9) has a solids conduit (12) leading to the annular fluidized bed (10) of the reactor (1) and a solids conduit (13) leading to a downstream treatment stage.

13. The plant as claimed in claim 12, **characterized in that** the gas supply system has a gas supply tube (3) which extends upwards substantially vertically from the lower region of the reactor (1) into the mixing chamber (7) of the reactor (1), the gas supply tube (3) being surrounded by a chamber which at least partly extends around the gas supply tube and in which a stationary annular fluidized bed (10) is formed.

14. The plant as claimed in claim 12 or 13, **characterized in that** the gas supply tube (3) is arranged approximately centrally with reference to the cross-sectional area of the reactor (1).

15. The plant as claimed in any of claims 12 to 14, **characterized in that** in the annular chamber of the reactor (1) a gas distributor (5) is provided, which divides the chamber into an upper annular fluidized bed (10) and a lower gas distributor chamber (4) which is connected with a supply conduit (6) for fluidizing gas.

16. The plant as claimed in any of claims 12 to 15, **characterized in that** a plant for producing sulfuric acid is provided downstream of the reactor (1), which plant is connected with the exhaust gas conduit of the reactor (1) and/or of the downstream separator (9).

**Patentansprüche**

1. Ein Verfahren zur Wärmebehandlung von feinkörnigen Feststoffen, insbesondere zur thermischen Spaltung von Salzen, bei dem die Feststoffe in einem Reaktor (1) mit Wirbelschicht auf eine Temperatur von 200 bis 1400 °C erhitzt werden, **dadurch gekennzeichnet, dass** ein erstes Gas oder Gasgemisch von unten durch ein vorzugsweise zentrales Gaszufuhrrohr (3) in eine Wirbelmischkammer (7) des Reaktors (1) eingeführt wird, wobei das Gaszufuhrrohr (3) wenigstens teilweise von einer durch Zufuhr von Fluidisierungsgas fluidisierten, stationären Ringwirbelschicht (10) umgeben wird, und dass die Gasgeschwindigkeiten des ersten Gases oder Gasgemisches sowie des Fluidisierungsgases für die Ringwirbelschicht (10) derart eingestellt werden, dass die Partikel-Froude-Zahlen in dem Gaszufuhrrohr (3) zwischen 1 und 100, in der Ringwirbelschicht (10) zwischen 0,02 und 2 sowie in der Wirbelmischkammer (7) zwischen 0,3 und 30 betragen.

2. Das Verfahren nach Anspruch 1, **dadurch gekenn-**

zeichnet, dass die Partikel-Froude-Zahl in dem Gaszufuhrrohr (3) zwischen 1,15 und 20, insbesondere etwa zwischen 7 und 8, beträgt.

3. Das Verfahren nach Anspruch 1 oder 2, **dadurch gekennzeichnet, dass** die Partikel-Froude-Zahl in der Ringwirbelschicht (10) zwischen 0,115 und 1,15, insbesondere etwa zwischen 0,4 und 0,5, beträgt.

4. Das Verfahren nach einem der vorhergehenden Ansprüche, **dadurch gekennzeichnet, dass** die Partikel-Froude-Zahl in der Wirbelmischkammer (7) zwischen 0,37 und 3,7, insbesondere etwa zwischen 1,5 und 1,8, beträgt.

5. Das Verfahren nach einem der vorhergehenden Ansprüche, **dadurch gekennzeichnet, dass** der Füllstand der Feststoffe in dem Reaktor (1) so eingestellt wird, dass sich die Ringwirbelschicht (10) über das obere Mündungsende des Gaszufuhrrohrs (3) hinaus erstreckt und dass ständig Feststoff in das erste Gas oder Gasgemisch eingetragen und von dem Gasstrom zu der oberhalb des Mündungsbereichs des Gaszufuhrrohres (3) befindlichen Wirbelmischkammer (7) mitgeführt wird.

6. Das Verfahren nach einem der vorhergehenden Ansprüche, **dadurch gekennzeichnet, dass** als Ausgangsmaterial auf bspw. etwa 350 °C vorgewärmter, sulfathaltiger Feststoff, bspw. Eisensulfat oder Magnesiumsulfat, zugeführt wird.

7. Das Verfahren nach einem der vorhergehenden Ansprüche, **dadurch gekennzeichnet, dass** dem Reaktor (1) über das Gaszufuhrrohr (3) vorgewärmte Luft mit einer Temperatur von etwa 300 bis 500 °C zugeführt wird.

8. Das Verfahren nach einem der vorhergehenden Ansprüche, **dadurch gekennzeichnet, dass** dem Reaktor (1) als Fluidisierungsgas vorgewärmte Luft mit einer Temperatur von etwa 300 bis 500 °C zugeführt wird.

9. Das Verfahren nach einem der vorhergehenden Ansprüche, **dadurch gekennzeichnet, dass** in die Ringwirbelschicht (10) und/oder die Wirbelmischkammer (7) des Reaktors (1) Brennstoff eingebracht wird und dass der Druck in dem Reaktor (1) zwischen 0,8 und 10 bar beträgt.

10. Das Verfahren nach Anspruch 9, **dadurch gekennzeichnet, dass** der Brennstoff in der Ringwirbelschicht (10) unter reduzierender Atmosphäre unvollständig verbrannt wird und in der Wirbelmischkammer (7) vollständig ausbrennt.

11. Das Verfahren nach einem der vorhergehenden Ansprüche, **dadurch gekennzeichnet, dass** das Abgas der Wärmebehandlung in dem Reaktor (1) einer nachgeschalteten Anlage zur Produktion von Schwefelsäure zugeleitet wird.

12. Eine Anlage zur Wärmebehandlung von feinkörnigen Feststoffen gemäß einem Verfahren nach einem der Ansprüche 1 bis 11, mit einem als Wirbelschichtreaktor ausgebildeten Reaktor (1) zur Wärmebehandlung, **dadurch gekennzeichnet, dass** der Reaktor (1) ein Gaszuführungssystem aufweist, welches derart ausgebildet ist, dass durch das Gaszuführungssystem strömendes Gas Feststoff aus einer stationären Ringwirbelschicht (10), die das Gaszuführungssystem wenigstens teilweise umgibt, in die Wirbelmischkammer (7) mitreißt, dass stromaufwärts des Reaktors eine Vorwärmstufe vorgesehen ist, um wenigstens einen Teil des Feuchtigkeitsgehalts der Feststoffe zu entfernen, dass ein Abscheider (9) zum Abtrennen von Feststoffen stromabwärts des Reaktors (1) vorgesehen ist, und dass der Abscheider (9) eine Feststoffleitung (12) aufweist, die zu der Ringwirbelschicht (10) des Reaktors (1) führt, und eine Feststoffleitung (13), die zu einer nachgeschalteten Behandlungsstufe führt.

13. Die Anlage nach Anspruch 12, **dadurch gekennzeichnet, dass** das Gaszuführungssystem ein sich vom unteren Bereich des Reaktors (1) im Wesentlichen vertikal nach oben bis in die Wirbelmischkammer (7) des Reaktors (1) erstreckendes Gaszufuhrrohr (3) aufweist, wobei das Gaszufuhrrohr (3) von einer wenigstens teilweise um das Gaszufuhrrohr herumführenden Kammer, in der eine stationäre Ringwirbelschicht (10) ausgebildet ist, umgeben ist.

14. Die Anlage nach Anspruch 12 oder 13, **dadurch gekennzeichnet, dass** das Gaszufuhrrohr (3), bezogen auf die Querschnittsfläche des Reaktors (1), in etwa mittig angeordnet ist.

15. Die Anlage nach einem der Ansprüche 12 bis 14, **dadurch gekennzeichnet, dass** in der ringförmigen Kammer des Reaktors (1) ein Gasverteiler (5) vorgesehen ist, welcher die Kammer in eine obere Ringwirbelschicht (10) und eine untere Gasverteilerkammer (4) unterteilt, die mit einer Zufuhrleitung (6) für Fluidisierungsgas verbunden ist.

16. Die Anlage nach einem der Ansprüche 12 bis 15, **dadurch gekennzeichnet, dass** dem Reaktor (1) eine Anlage zur Produktion von Schwefelsäure nachgeschaltet ist, die mit der Abgasleitung des Reaktors (1) und/oder des nachgeschalteten Abscheiders (9) verbunden ist.

**Revendications**

1. Procédé de traitement thermique de solides à grains fins, en particulier pour la décomposition thermique des sels, dans lequel les solides sont chauffés à une température de 200 à 1400°C dans un réacteur à lit fluidisé (1), **caractérisé en ce qu'**un premier gaz ou un mélange de gaz est introduit par le dessous à travers un tube d'alimentation en gaz (3) de préférence central, dans une chambre de mélange (7) du réacteur (1), le tube d'alimentation en gaz (3) étant au moins partiellement entouré par un lit fluidisé annulaire fixe (10) qui est fluidisé par alimentation d'un gaz de fluidisation, et **en ce que** les vitesses du premier gaz ou du mélange de gaz et du gaz de fluidisation destiné au lit fluidisé annulaire (10) sont réglées de manière que les nombres de Froude des particules dans le tube d'alimentation en gaz (3) soient compris entre 1 et 100, dans le lit fluidisé annulaire (10) entre 0,02 et 2 et dans la chambre de mélange (7) entre 0,3 et 30.

2. Procédé selon la revendication 1, **caractérisé en ce que** le nombre de Froude des particules dans le tube d'alimentation en gaz (3) est compris entre 1,15 et 20, en particulier entre environ 7 et 8.

3. Procédé selon la revendication 1 ou 2, **caractérisé en ce que** le nombre de Froude des particules dans le lit fluidisé annulaire (10) est compris entre 0,115 et 1,15, en particulier entre environ 0,4 et 0,5.

4. Procédé selon l'une quelconque des revendications précédentes, **caractérisé en ce que** le nombre de Froude des particules dans la chambre de mélange (7) est compris entre 0,37 et 3,7, en particulier entre environ 1,5 et 1,8.

5. Procédé selon l'une quelconque des revendications précédentes, **caractérisé en ce que** la hauteur de lit des solides dans le réacteur (1) est réglée de manière que le lit fluidisé annulaire (10) s'étende au-delà de l'extrémité de l'orifice supérieur du tube d'alimentation en gaz (3), et que les solides soient constamment introduits dans le premier gaz ou le mélange de gaz et soient entraînés par le flux de gaz vers la chambre de mélange (7) située au-dessus de la zone de l'orifice du tube d'alimentation en gaz (3).

6. Procédé selon l'une quelconque des revendications précédentes, **caractérisé en ce que** des solides contenant des sulfates, comme du sulfate de fer ou du sulfate de magnésium, préchauffés par exemple à environ 350°C, sont fournis comme produit de départ.

7. Procédé selon l'une quelconque des revendications précédentes, **caractérisé en ce que** de l'air préchauffé à une température d'environ 300 à 500°C est fourni au réacteur (1) via le tube d'alimentation en gaz (3).

8. Procédé selon l'une quelconque des revendications précédentes, **caractérisé en ce que** de l'air préchauffé à une température d'environ 300 à 500°C est fourni au réacteur (1) en tant qu'air de fluidisation.

9. Procédé selon l'une quelconque des revendications précédentes, **caractérisé en ce que** du carburant est introduit dans le lit fluidisé annulaire (10) et/ou la chambre de mélange (7) du réacteur (1) et **en ce que** la pression dans le réacteur (1) est située entre 0,8 et 10 bar.

10. Procédé selon la revendication 9, **caractérisé en ce que** le carburant est brûlé de manière incomplète sous atmosphère réductrice dans le lit fluidisé annulaire (10) et brûle complètement dans la chambre de mélange (7).

11. Procédé selon l'une quelconque des revendications précédentes, **caractérisé en ce que** le gaz d'échappement du traitement thermique dans le réacteur (1) est alimenté vers une installation en aval pour produire de l'acide sulfurique.

12. Installation pour le traitement thermique de solides à grains fins selon un procédé selon l'une quelconque des revendications 1 à 11, comprenant un réacteur (1) constituant un réacteur à lit fluidisé pour le traitement thermique, **caractérisé en ce que** le réacteur (1) présente un système d'alimentation en gaz qui est formé de telle manière que le gaz s'écoulant à travers le système d'alimentation en gaz entraîne des solides provenant d'un lit fluidisé annulaire fixe (10) qui entoure au moins partiellement le système d'alimentation en gaz, dans la chambre de mélange (7), qu'en amont du réacteur une étape de préchauffage est prévue pour retirer au moins une partie de la teneur en humidité des solides, qu'un séparateur (9) pour séparer les solides est prévu en aval du réacteur (1), et que le séparateur (9) présente un conduit de solides (12) menant au lit fluidisé annulaire fixe (10) du réacteur (1) et un conduit de solides (13) menant à une étape de traitement en aval.

13. Installation selon la revendication 12, **caractérisée en ce que** le système d'alimentation en gaz présente un tube d'alimentation en gaz (3) qui s'étend essentiellement verticalement vers le haut depuis la partie inférieure du réacteur (1) dans la chambre de mélange (7) du réacteur (1), le tube d'alimentation en gaz (3) étant entouré par une chambre qui s'étend au moins partiellement autour du tube d'alimentation en gaz et dans laquelle un lit fluidisé annulaire fixe (10) est formé.

14. Installation selon la revendication 12 ou 13, **caractérisée en ce que** le tube d'alimentation en gaz (3) est agencé environ de manière centrale par rapport à la section du réacteur (1).

15. Installation selon l'une quelconque des revendications 12 à 14, **caractérisée en ce qu'**un distributeur de gaz (5) est prévu dans la chambre annulaire du réacteur (1), lequel divise la chambre en un lit fluidisé annulaire supérieur (10) et une chambre de distributeur de gaz inférieure (4) qui est reliée à un conduit d'alimentation (6) pour le gaz de fluidisation.

16. Installation selon l'une quelconque des revendications 12 à 15, **caractérisée en ce qu'**une installation pour produire de l'acide sulfurique est prévue en aval du réacteur (1), laquelle installation est reliée au conduit de gaz d'échappement du réacteur (1) et/ou du séparateur (9) en aval.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2710978 A1
- DE 2408308 C2
- EP 0630683 A1